# FASCICULE DE BREVET EUROPEEN

(11) **EP 1 230 832 B1**
(45) Date de publication et mention de la délivrance du brevet: **09.04.2008**
(21) Numéro de dépôt: 02360051.3
(22) Date de dépôt: 04.02.2002
(51) Int. Cl.: A01B 3/46, A01B 73/00

(54) **Charrue**
Pflug
Plough

(30) Priorité: 13.02.2001 FR 0102204
(43) Date de publication de la demande: 14.08.2002
(73) Titulaire: Kuhn-Huard S.A., 44142 Chateaubriant Cedex (FR)
(72) Inventeur: Herault, Vincent, 44390 Les Touches (FR); Paugam, Denis, 44410 Chateaubriant (FR)
(74) Mandataire: Andres, Jean-Claude

(56) Documents cités:
- EP-A- 0 477 041
- DE-A- 4 339 323
- FR-A- 2 725 340
- GB-A- 995 501
- US-A- 1 931 815

## Description

La présente invention se rapporte au domaine technique générale du machinisme agricole. Elle concerne plus particulièrement une charrue munie d'un châssis reposant au moins partiellement sur le sol, au travail comme au transport, au moyen d'au moins une roue combinée, voir p. ex. DE-A-4339323.

D'une manière connue de l'homme de l'art, le châssis d'une telle charrue est lié à un véhicule moteur. Ledit châssis comporte des corps de labour destinés à travailler la terre. La roue combinée, quant à elle, permet d'une part de régler la profondeur de travail d'au moins une partie desdits corps de labour. D'autre part lors du transport, ladite roue combinée constitue un point d'appui pour ledit châssis permettant ainsi de soulager ledit véhicule moteur d'au moins une partie du poids de ladite charrue. Le document FR 2 326 847 décrit une charrue portée réversible comportant une telle roue combinée.

En pratique, il est constaté que cette charrue connue présente des inconvénients lors de son transport. En effet lors du déplacement de ladite charrue sur un terrain accidenté, les chocs subis par la roue combinée sont transmis en intégralité audit châssis. Ce dernier doit donc faire face à des sollicitations importantes. Pour atténuer ces chocs, l'utilisateur est obligé de réduire considérablement sa vitesse d'avance.

Le but de la présente invention vise à remédier à cet inconvénient de l'état de la technique

Conformément à la présente invention, telle que revendiquée, ladite charrue se caractérise par le fait qu'elle comporte un dispositif permettant d'éviter au moins partiellement la transmission audit châssis des chocs subis par ladite roue combinée lors du transport. Avec un tel dispositif, ledit châssis subira donc moins les irrégularités du sol, d'où une diminution desdites sollicitations. Par conséquent, l'utilisateur n'est plus contraint de réduire sa vitesse d'avance lors du déplacement.

D'autres caractéristiques de l'invention apparaîtront dans la description suivante d'un exemple de réalisation non limitatif de l'invention représenté sur les dessins annexés sur lesquels :
- la **figure 1** représente une vue latérale, en position de travail, d'une charrue conforme à l'invention,
- la **figure 2** représente une vue latérale, en position de transport, de la charrue de la figure 1,
- la **figure 3** représente une vue d'une roue combinée, à une autre échelle, de la figure 1,
- la **figure 4** représente une vue suivant IV de la figure 3,

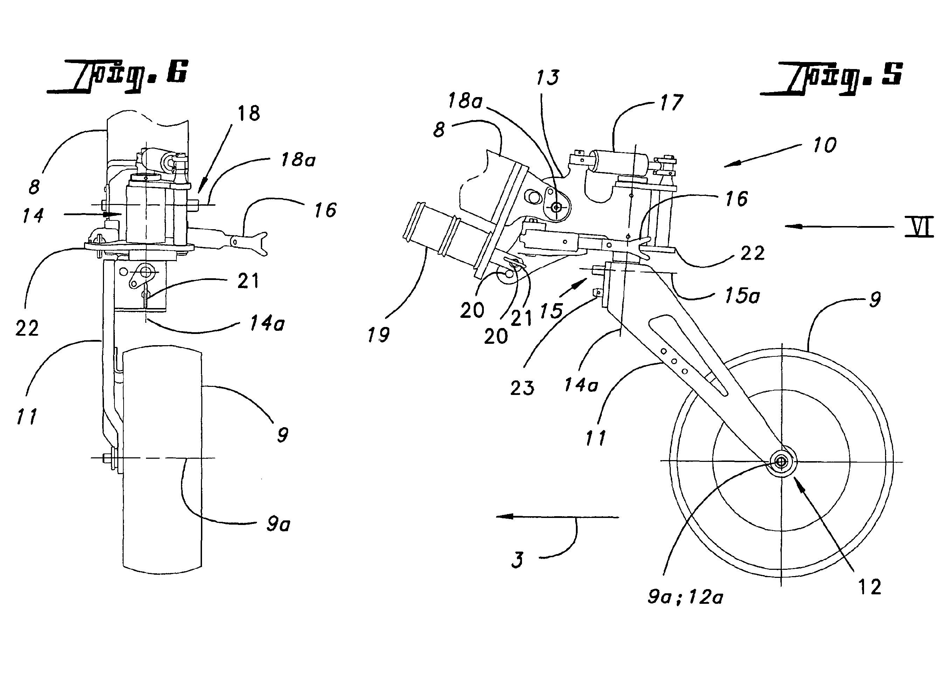

- la **figure 5** représente une vue d'une roue combinée, à une autre échelle, de la figure 2, et
- la **figure 6** représente une vue suivant VI de la figure 5.

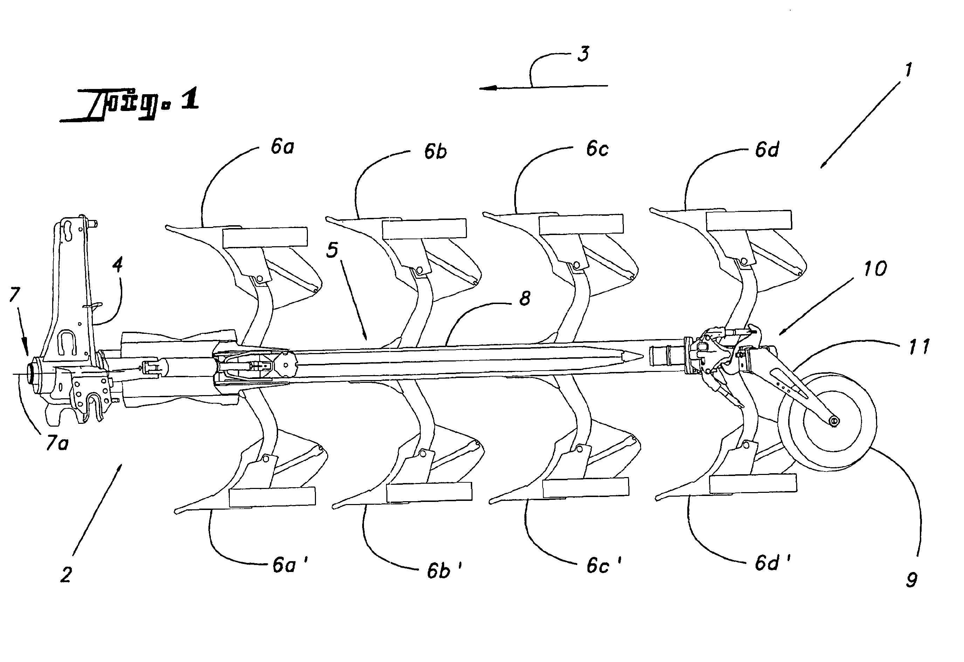

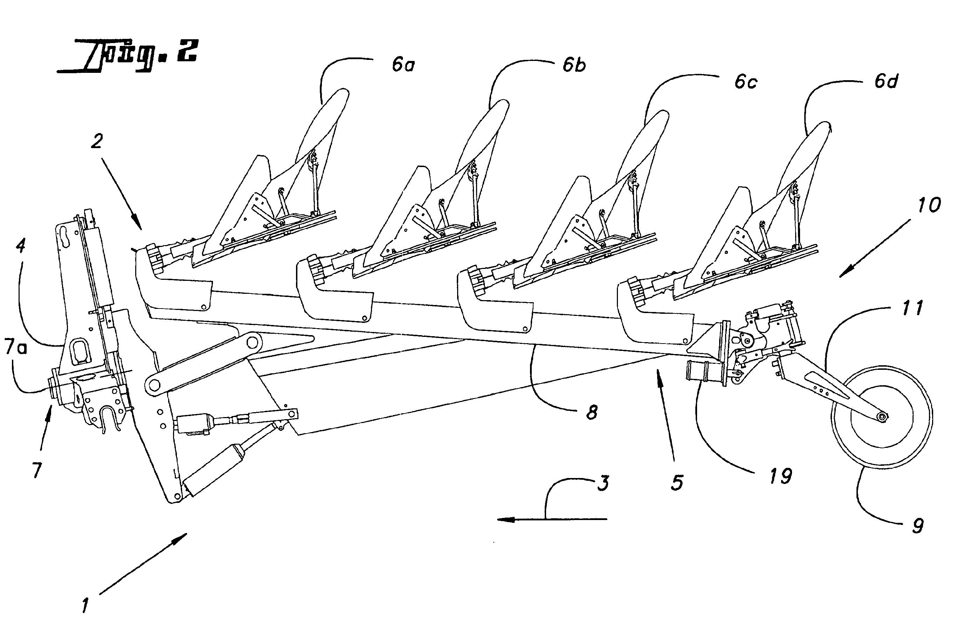

La charrue (1), représentée sur les figures 1 et 2, comporte un châssis (2) lié à un attelage d'un tracteur (non représenté). Ledit tracteur permet de déplacer ladite charrue (1) suivant une direction et un sens d'avance indiqué par la flèche (3).

Dans la suite de la description, les notions "avant" et "arrière", "devant" et "derrière" sont définies par rapport au sens d'avance (3) et les notions "droite" et "gauche" sont définies en regardant ladite charrue (1) de l'arrière dans ledit sens d'avance (3).

D'une manière connue de l'homme de l'art, ledit châssis (2) comporte un avant-train (4) et un bâti (5). L'avant-train (4) permet l'attelage de ladite charrue (1) audit tracteur. Pour sa part, ledit bâti (5) supporte des corps de labour (6).

Dans l'exemple de réalisation représenté sur les figures 1 et 2, ladite charrue (1) est de type réversible. Ledit bâti (5) est donc lié à l'avant-train (4) au moyen d'une articulation (7) d'axe (7a) dirigé au moins sensiblement suivant ladite direction d'avance (3). En pivotant d'environ 180° autour de ladite articulation (7), ledit bâti (5) peut ainsi occuper au moins deux positions de travail. Par contre en ne pivotant que de 90°, ledit bâti (5) passe d'une des positions de travail à une position de transport.

D'une manière connue de l'homme de l'art, lesdits corps de labour (6) sont liés à une structure porteuse (8) disposée au moins sensiblement suivant ladite direction d'avance (3). De manière préférentielle, lesdits corps de labour (6) sont répartis suivant deux groupes (6a, 6b, 6c, 6d ; 6a', 6b', 6c', 6d'), chacun desdits groupes (6a, 6b, 6c, 6d ; 6a', 6b', 6c', 6d') étant actif dans une position de travail respective. A la lumière de la figure 1, lesdits corps de labour (6a', 6b', 6c', 6d') sont situés sous ladite structure porteuse (8), alors que lesdits corps de labour (6a, 6b, 6c, 6d) sont situés au-dessus de ladite structure porteuse (8). On notera encore que lesdits corps de labour (6a, 6b, 6c, 6d) sont réalisés de telle sorte qu'ils déversent la terre vers la gauche. Lesdits corps de labour (6a', 6b', 6c', 6d') sont, quant à eux, réalisés de telle sorte qu'ils déversent la terre vers la droite. A la lumière de la figure 2, les deux groupes (6a, 6b, 6c, 6d ; 6a', 6b', 6c', 6d') sont situés approximativement dans un plan sensiblement horizontal et avantageusement au-dessus de ladite structure porteuse (8).

Dans l'exemple de réalisation représenté sur les figures 1 et 2, ledit châssis (2) repose au moins partiellement sur le sol au moyen d'une roue combinée (9). Ladite roue combinée (9) est liée à l'arrière de ladite structure porteuse (8) au moyen d'un mécanisme (10).

D'une manière connue de l'homme de l'art, ledit mécanisme (10) comporte un bras de roue (11). Ladite roue combinée (9) est liée à une extrémité dudit bras de roue (11) au moyen d'une deuxième articulation (12) d'axe (12a). Ledit axe (12a) est au moins sensiblement confondu avec l'axe de révolution (9a) de ladite roue combinée (9). Pour sa part, l'autre extrémité dudit bras de roue (11) est lié à un support (13) au moyen d'une troisième articulation (14) d'axe (14a) et d'une quatrième articulation (15) d'axe (15a).

Lors du travail, ledit axe (14a) est sensiblement parallèle audit axe (12a). Lorsque ledit bâti (5) passe d'une position de travail à une autre, ladite roue combinée (9) pivote autour de l'axe (14a). Ladite roue combinée (9) peut ainsi occuper deux positions de travail définies au moyen d'une butée respective (16). Lesdites butées (16) sont avantageusement réglables et permettent de déterminer la profondeur de travail d'au moins une partie desdits corps de labour (6). De manière préférentielle, le pivotement de ladite roue combinée (9) autour dudit axe (14a) est ralenti au moyen d'un amortisseur (17). Pour sa part, ledit axe (15a) est au moins sensiblement perpendiculaire audit axe (14a). Lorsque ledit bâti (5) passe d'une position de travail à la position de transport, ladite roue combinée (9) pivote autour de l'axe (15a) d'environ 90°. Ladite roue combinée (9) peut ainsi passer d'une position de travail à une position de transport.

Ledit support (13), quant à lui, est lié à ladite structure porteuse (8) au moyen d'une cinquième articulation (18) d'axe (18a). Au travail, ledit axe (18a) est dirigé suivant une direction sensiblement verticale. Avantageusement, ladite cinquième articulation (18) permet à ladite roue combinée (9) de rester sensiblement alignée avec ladite direction d'avance (3). Au transport suite au pivotement dudit bâti (5) d'environ 90°, ledit axe (18a) est donc dirigé suivant une direction sensiblement horizontale.

La particularité de la présente invention consiste à intégrer un dispositif amortisseur (19) entre ledit châssis (2) et ledit mécanisme (10). Dans l'exemple de réalisation représenté sur les figures, ledit dispositif amortisseur (19) comporte un ressort lié d'une part à ladite structure porteuse (8) et d'autre part audit support (13). L'action dudit ressort est avantageusement réglable. A cet effet, ledit support (13) comporte au moins deux trous de fixation (20). Lesdits trous de fixation (20') sont destinés à lier ledit ressort audit support (13) au moyen d'une broche (21). Ainsi lors du transport, les chocs subis par ladite roue combinée (9) sont amortis.

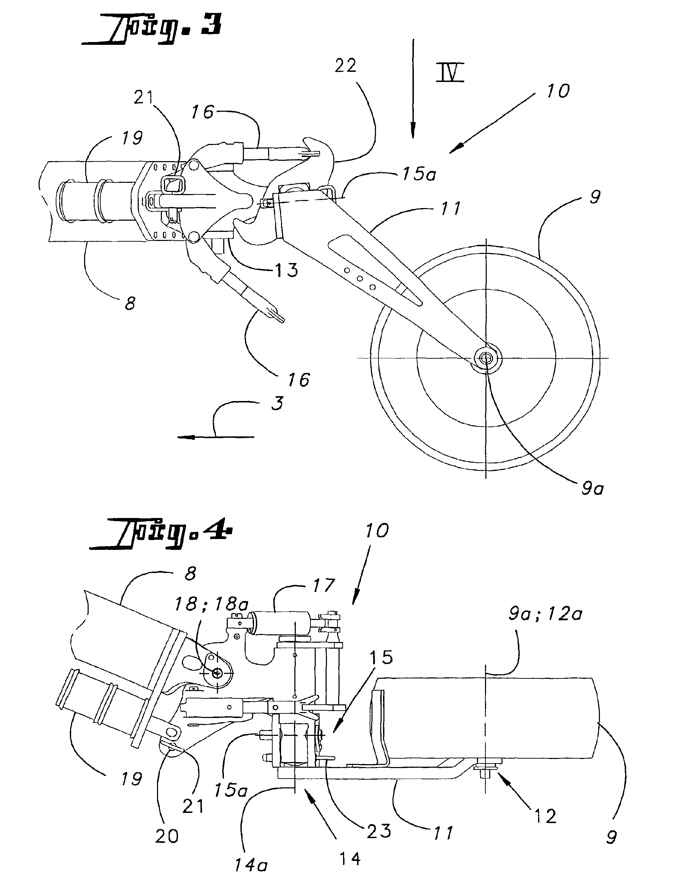

D'une manière préférentielle, ledit dispositif amortisseur (19) est inactif au travail. A la lumière de la figure 4, ledit ressort est désaccouplé dudit support (13) en retirant ladite broche (21). Ainsi, ladite roue combinée (9) peut pivoter librement autour de ladite cinquième articulation (18).

Dans l'exemple de réalisation représenté sur les figures, ledit mécanisme (10) comporte une plaque (22) liée en rotation autour dudit axe (14a). Ladite plaque (22) est destinée à venir en contact avec lesdites butées (16). Ladite plaque (22) est également liée audit amortisseur (17). Au travail, ledit bras de roue (11) est solidaire de ladite plaque (22). Pour ce faire, ledit bras de roue (11) et ladite plaque (22) comportent des formes complémentaires qui s'emboîtent. Au transport, le pivotement de 90° dudit bras de roue (11) autour de ladite quatrième articulation (15) permet avantageusement de désolidariser lesdites formes complémentaires. Ladite roue combiné (9) peut ainsi pivoter librement autour dudit axe (14a). De manière préférentielle, chaque position dudit bras de roue (11) autour de ladite quatrième articulation (15) est sécurisé par une broche (23).

Le dispositif (19) et la charrue (1) qui viennent d'être décrits, ne sont qu'un exemple de réalisation et d'utilisation qui ne saurait en aucun cas limiter le domaine de protection défini par les revendications suivantes. Différentes modifications restent possibles, notamment en ce qui concerne la constitution des divers éléments ou par substitution d'équivalents techniques.

Il est parfaitement envisageable qu'une telle charrue (1) peut, de part sa conception, comporter un dispositif (19) inopérant en labour et actif au transport, qui nécessite aucune intervention de l'utilisateur. De plus, le verrouillage dudit bras de roue (11) autour de ladite quatrième articulation (15) se fait avantageusement de manière automatique.

## Revendications

1. Charrue de type réversible (1) munie d'un châssis (2) comportant un avant-train (4) et un bâti (5), ledit bâti (5) étant lié à l'avant-train (4) au moyen d'une articulation (7) d'axe dirigé au moins sensiblement suivant la direction d'avance, ledit châssis (2) reposant au moins partiellement sur le sol, au travail comme au transport, au moyen d'au moins une roue combinée (9), ladite roue combinée (9) permettant de régler la profondeur de travail des corps de labour (6) et lors du transport de supporter une partie du poids de ladite charrue (1), ladite roue combinée (9) étant liée audit châssis (2) au moyen d'un mécanisme (10), ledit mécanisme (10) comporte un bras de roue (11) lié d'une part à ladite roue combinée (9) au moyen d'une deuxième articulation (12) et d'autre part à un support (13), ledit bras de roue (11) est lié audit support (13) au moyen d'une troisième articulation (14) et d'une quatrième articulation (15), ***caractérisée par le fait que*** ladite charrue (1) comporte un dispositif (19) permettant d'éviter au moins partiellement la transmission audit châssis (2) des chocs subis par ladite roue combinée (9) lors du transport.

2. Charrue selon la revendication 1, ***caractérisée par le fait que*** ledit dispositif (19) est lié d'une part audit châssis (2) et d'autre part audit mécanisme (10).

3. Charrue selon la revendication 1 ou 2, ***caractérisée par le fait que*** ledit support (13) est lié audit châssis (2) au moyen d'une cinquième articulation (18).

4. Charrue selon l'une quelconque des revendications 1 à 3, ***caractérisée par le fait que*** ladite troisième articulation (14) est au moins sensiblement perpendiculaire à ladite quatrième articulation (15).

5. Charrue selon l'une quelconque des revendications 1 à 4, ***caractérisée par le fait que*** lorsque ledit châssis (2) passe d'une position de travail à une autre, ladite roue combinée (9) pivote autour de ladite troisième articulation (14).

6. Charrue selon l'une quelconque des revendications 1 à 5, ***caractérisée par le fait que*** le pivotement de ladite roue combinée (9) autour de ladite troisième articulation (14) est ralenti au moyen d'un amortisseur (17).

7. Charrue selon la revendication 3, ***caractérisée par le fait que*** ladite cinquième articulation (18) est au moins sensiblement horizontale au transport.

8. Charrue selon l'une quelconque des revendications 1 à 7, ***caractérisée par le fait que*** lorsque ledit châssis (2) passe d'une position de travail à la position de transport, ladite roue combinée (9) pivote autour de ladite quatrième articulation (15).

9. Charrue selon l'une quelconque des revendications 1 à 8, ***caractérisée par le fait que*** les positions de travail et de transport dudit bras de roue (11) sont sécurisés par une broche (23).

10. Charrue selon l'une quelconque des revendications 1 à 9, ***caractérisée par le fait que*** ledit support (13) comporte des butées (16) destinées à limiter, au travail, le pivotement dudit bras de roue (11) autour de ladite troisième articulation (14).

11. Charrue selon l'une quelconque des revendications 1 à 10, ***caractérisée par le fait que*** ledit mécanisme (10) comporte une plaque (22) liée en rotation autour de ladite troisième articulation (14).

12. Charrue selon la revendication 11, ***caractérisée par le fait que*** ladite plaque (22) est liée, au travail, audit bras de roue (11).

13. Charrue selon la revendication 11, ***caractérisée par le fait que*** ladite plaque (22) est désaccouplée, au transport, dudit bras de roue (11).

14. Charrue selon l'une quelconque des revendications 1 à 13, ***caractérisée par le fait que*** le dispositif amortisseur (19) est réglable au moyen de deux trous (20).

15. Charrue selon l'une quelconque des revendications 1 à 14, ***caractérisée par le fait que*** ledit dispositif amortisseur (19) est inopérant au travail.

## Claims

1. Plough (1) of the reversible type provided with a chassis (2) comprising a headstock (4) and a frame (5), the said frame (5) being connected to the headstock (4) by means of an articulation (7) with an axis directed at least substantially in the direction of travel, the said chassis (2) resting at least partially on the ground, in work as in transport, by means of a combined wheel (9), the said combined wheel (9) making it possible to adjust the working depth of the plough bodies (6) and, during transport, to support a portion of the weight of the said plough (1), the said combined wheel (9) being connected to the said chassis (2) by means of a mechanism (10), the said mechanism (10) comprises a wheel arm (11) connected on the one hand to the said combined wheel (9) by means of a second articulation (12) and on the other hand to a support (13), the said wheel arm (11) being connected to the said support (13) by means of a third articulation (14) and a fourth articulation (15), ***characterized in* that** the said plough (1) comprises a device (19) making it possible to at least partially prevent the transmission to the said chassis (2) of the impacts sustained by the said combined wheel (9) during transport.

2. Plough according to Claim 1, ***characterized in* that** the said device (19) is connected on the one hand to the said chassis (2) and on the other hand to the said mechanism (10).

3. Plough according to Claim 1 or 2, ***characterized in* that** the said support (13) is connected to the said chassis (2) by means of a fifth articulation (18).

4. Plough according to any one of Claims 1 to 3, ***characterized in* that** the said third articulation (14) is at least substantially perpendicular to the said fourth articulation (15).

5. Plough according to any one of Claims 1 to 4, ***characterized in* that**, when the said chassis (2) moves from one working position to another, the said combined wheel (9) pivots about the said third articulation (14).

6. Plough according to any one of Claims 1 to 5, ***characterized in* that** the pivoting of the said combined wheel (9) about the said third articulation (14) is slowed down by means of a damper (17).

7. Plough according to Claim 3, ***characterized in* that** the said fifth articulation (18) is at least substantially horizontal in transport.

8. Plough according to any one of Claims 1 to 7, ***characterized in* that**, when the said chassis (2) moves from a working position to the transport position, the said combined wheel (9) pivots about the said fourth articulation (15).

9. Plough according to any one of Claims 1 to 8, ***characterized in* that** the working and transport positions of the said wheel arm (11) are secured by a pin (23).

10. Plough according to any one of Claims 1 to 9, ***characterized in* that** the said support (13) comprises stops (16) intended to limit, in work, the pivoting of the said wheel arm (11) about the said third articulation (14).

11. Plough according to any one of Claims 1 to 10, ***characterized in* that** the said mechanism (10) comprises a plate (22) connected in rotation about the said third articulation (14).

12. Plough according to Claim 11, ***characterized in* that** the said plate (22) is connected, in work, to the said wheel arm (11).

13. Plough according to Claim 11, ***characterized in* that** the said plate (22) is uncoupled, in transport, from the said wheel arm (11).

14. Plough according to any one of Claims 1 to 13, ***characterized in* that** the damping device (19) can be adjusted by means of two holes (20).

15. Plough according to any one of Claims 1 to 14, ***characterized in* that** the said damping device (19) is inoperative in work.

## Patentansprüche

1. Pflug (1) des drehbaren Typs, der mit einen Gestell (2) versehen ist, dass ein Pflugkopf (4) und ein Rahmen (5) umfasst, wobei der Rahmen (5) mit dem Pflugkopf (4) mittels eines Gelenks (7) mit einer im Wesentlichen in Vorschubrichtung ausgerichteten Achse verbunden ist, wobei das Gestell (2) mindestens teilweise, bei der Arbeit, wie beim Transport, mittels mindestens eines kombinierten Rades (9) am Boden aufliegt, wobei es das kombinierte Rad (9) ermöglicht, die Arbeitstiefe der Pflugkörper (6) einzustellen und beim Transport einen Teil des Gewichts des Pflugs (1) zu tragen, wobei das kombinierte Rad (9) mit dem Gestell (2) mittels eines Mechanismus (10) verbunden ist, wobei der Mechanismus (10) einen Radarm (11) umfasst, der einerseits mit dem kombinierten Rad (9) mittels eines zweiten Gelenks (12) und andererseits mit einer Stütze (13) verbunden ist, wobei der Radarm (11) mit der Stütze (13) mittels eines dritten Gelenks (14) und eines vierten Gelenks (15) verbunden ist, ***dadurch gekennzeichnet,* dass** der Pflug (1) eine Vorrichtung (19) umfasst, die es ermöglicht, mindestens teilweise die Übertragung der Stöße, denen das kombinierte Rad (9) beim Transport ausgesetzt ist, auf das Gestell (2) zu verhindern.

2. Pflug nach Anspruch 1, ***dadurch gekennzeichnet,* dass** die Vorrichtung (19) einerseits mit dem Gestell (2) und andererseits mit dem Mechanismus (10) verbunden ist.

3. Pflug nach Anspruch 1 oder 2, ***dadurch gekennzeichnet,* dass** die Stütze (13) mit dem Gestell (2) mittels eines fünften Gelenks (18) verbunden ist.

4. Pflug nach irgend einem der Ansprüche 1 bis 3, ***dadurch gekennzeichnet,* dass** das dritte Gelenk (14) mindestens im Wesentlichen auf das vierte Gelenk (15) senkrecht ist.

5. Pflug nach irgend einem der Ansprüche 1 bis 4, ***dadurch gekennzeichnet,* dass**, wenn das Gestell (2) von einer Arbeitsposition in eine andere übergeht, das kombinierte Rad (9) um das dritte Gelenk (14) schwenkt.

6. Pflug nach irgend einem der Ansprüche 1 bis 5, ***dadurch gekennzeichnet,* dass** das Schwenken des kombinierten Rades (9) um das dritte Gelenk (14) mittels eines Dämpfers (17) verlangsamt wird.

7. Pflug nach Anspruch 3, ***dadurch gekennzeichnet,* dass** das fünfte Gelenk (18) mindestens im Wesentlichen beim Transport horizontal ist.

8. Pflug nach irgend einem der Ansprüche 1 bis 7, ***dadurch gekennzeichnet,* dass**, wenn das Gestell (2) von einer Arbeitsposition in die Transportposition übergeht, das kombinierte Rad (9) um das vierte Gelenk (15) schwenkt.

9. Pflug nach irgend einem der Ansprüche 1 bis 8, ***dadurch gekennzeichnet,* dass** die Arbeits- und Transportpositionen des Radarms (11) durch eine Spindel (23) gesichert sind.

10. Pflug nach irgend einem der Ansprüche 1 bis 9, ***dadurch gekennzeichnet,* dass** die Stütze (13) Anschläge (16) umfasst, die dazu bestimmt sind, bei der Arbeit das Schwenken des Radarms (11) um das dritte Gelenk (14) zu begrenzen.

11. Pflug nach irgend einem der Ansprüche 1 bis 10, ***dadurch gekennzeichnet,* dass** der Mechanismus (10) eine Platte (22) umfasst, die drehbar um das dritte Gelenk (14) verbunden ist.

12. Pflug nach Anspruch 11, ***dadurch gekennzeichnet,* dass** die Platte (22) bei der Arbeit mit dem Radarm (11) verbunden ist.

13. Pflug nach Anspruch 11, ***dadurch gekennzeichnet,* dass** die Platte (22) beim Transport vom Radarm (11) entkoppelt ist.

14. Pflug nach irgend einem Ansprüche 1 bis 13, ***dadurch gekennzeichnet,* dass** die Dämpfungsvorrichtung (19) mittels zweier Löcher (20) einstellbar ist.

15. Pflug nach irgend einem der Ansprüche 1 bis 14, ***dadurch gekennzeichnet,* dass** die Dämpfungsvorrichtung (19) während der Arbeit nicht aktiv ist.
